Europäisches Patentamt

European Patent Office

Office européen des brevets

(11) Veröffentlichungsnummer: **0 499 666 A1**

## (12) EUROPÄISCHE PATENTANMELDUNG

(21) Anmeldenummer: **91102434.7**

(51) Int. Cl.5: **C01F 11/18**

(22) Anmeldetag: **20.02.91**

(43) Veröffentlichungstag der Anmeldung:
**26.08.92 Patentblatt 92/35**

(84) Benannte Vertragsstaaten:
**AT BE CH DE DK ES FR GB GR IT LI LU NL SE**

(71) Anmelder: **Chemische Fabrik Kalk GmbH**
**Kalker Hauptstrasse 22 Postfach 91 01 57**
**W-5000 Köln 91(DE)**

(72) Erfinder: **Hofmann, Hans, Prof. Dr. sc. nat.**
**Goethestrasse 9**
**0-9200 Freiberg(DE)**
Erfinder: **Hossbach, Volker, Dipl.-Chem.**
**Hauptstrasse 25a**
**0-7261 Gröppendorf(DE)**
Erfinder: **Petzold, Dieter, Doz. Dr. sc. nat.**
**Fritz-Olbricht-Strasse 3**
**0-9200 Freiberg(DE)**
Erfinder: **Kallosche, Siegfried, Chem.-Ing.**

**Franz-Mehring-Strasse 21**
**0-7263 Mügeln(DE)**
Erfinder: **Richter, Anke, Dipl.-Chem.**
**Münzbachtal 12a**
**0-9200 Freiberg(DE)**
Erfinder: **Holldorf, Horst, Prof. Dr. sc. nat.**
**Preusserstrasse 23**
**0-9216 Siebenlehn(DE)**
Erfinder: **Kurz, Albert, Dipl.-Ing.**
**Döbelner Strasse 26**
**0-7263 Mügeln(DE)**
Erfinder: **Taubert, Sven, Dipl.-Chem.**
**Helmholtzstrasse 6**
**0-7420 Schmölln(DE)**

(74) Vertreter: **Werner, Hans-Karsten, Dr. et al**
**Deichmannhaus am Hauptbahnhof**
**W-5000 Köln 1(DE)**

(54) **Verfahren zur Herstellung sehr reiner Calciumcarbonatpulver.**

(57) Calciumcarbonatpulver - Fällung - calciumionenhaltige Lösung - carbonathaltige Lösung - Vaterit - Calcit.

Die Erfindung betrifft ein Verfahren zur Herstellung sehr reiner Calciumcarbonatpulver, die besonders als Analysenchemikalien sowie in der Pharmazie und Nahrungsgüterwirtschaft verwendet werden können. Ziel der Erfindung ist, Calciumcarbonatpulver hoher Reinheit in gleichbleibender Qualität mit niedrigen Kosten herzustellen. Der Erfindung liegt die technische Aufgabe zugrunde, ein Verfahren zur Herstellung von sehr reinen Calciumcarbonatpulvern in gleichbleibender Qualität aus wäßrigen Lösungen durch Fällung zu entwickeln, wobei die Fällstufe so zu gestalten ist, daß der Einbau von Fremdionen in das $CaCO_3$-Gitter weitestgehend vermieden wird, auch dann, wenn die eingesetzten Lösungen beträchtliche Mengen anderer Ionen enthalten. Erfindungsgemäß wird die technische Aufgabe dadurch gelöst, daß bei Verwendung von wäßrigen calciumionenhaltigen Lösungen und wäßrigen carbonationenhaltigen Lösungen die Fällung bei Temperaturen von 20 - 50°C, vorzugsweise 20 - 35°C, unter schwach basischen Bedingungen durchgeführt, der gebildete vorwiegend aus Vaterit bestehende Feststoff in Gegenwart einer wäßrigen Phase so lange bei Temperaturen von 15 - 80°C, vorzugsweise 20- 50°C, gehalten wird, bis sich der Vaterit möglichst vollständig in Calcit umgewandelt hat, dieser Feststoff nach bekannten Verfahren abgetrennt, gegebenenfalls gewaschen, getrocknet und gegebenenfalls nachzerkleinert wird.

Die Erfindung betrifft ein Verfahren zur Herstellung sehr reiner Calciumcarbonatpulver, die besonders als Analysenchemikalien sowie in der Pharmazie und Nahrungsgüterwirtschaft verwendet werden können.

Calciumcarbonatpulver können durch Mahlen von natürlichen calciumcarbonatischen Rohstoffen, durch Brennen calciumcarbonatischer Rohstoffe und Carbonisieren der aus dem gebrannten Kalk hergestellten Calciumhydroxidsuspensionen sowie durch Fällen des Calciumcarbonates aus wäßrigen Lösungen hergestellt werden.

Auch durch Aufbereitung natürlicher feinverteilter calciumcarbonatischer Rohstoffe, besonders Kreiden, lassen sich Calciumcarbonatpulver gewinnen.

Die Reinheit der erhaltenen Produkte hängt in erster Linie von der Reinheit der Ausgangstoffe ab. Sehr reine Stoffe lassen sich im wesentlichen nur durch Fällung herstellen.

Der Gehalt an Verunreinigungen der durch Fällung erzeugten Produkte läßt sich durch Einsatz entsprechend reiner Ausgangslösungen relativ gering halten, jedoch enthalten die nach den bisherigen Verfahren hergestellten Produkte stets bestimmte Mengen solcher Ionen, die außer den für die Bildung des Calciumcarbonats erforderlichen zwangsläufig als Gegenionen in den Lösungen enthalten sein müssen. Diese Ionen können durch intensives Waschen weiter abgereichert werden, der Abreicherung sind jedoch Grenzen dadurch gesetzt, daß sie bei den bisher bekannten Verfahren in unterschiedlichen Mengen im Gitter des Feststoffes eingebaut vorliegen.

Bisherige Untersuchungen führten zu dem Ergebnis, daß durch eine einfache Fällung kein Produkt hergestellt werden kann, daß der TGL 37181 entspricht.

Empirisch wurde gefunden, daß Produkte mit relativ hoher Reinheit erhalten werden können, wenn zu einer Ammoniumcarbonatlösung eine Calciumchloridlösung zudosiert wird, der dabei gebildete Feststoff abgetrennt, mit destilliertem Wasser gewaschen und im feuchten Zustand mehrere Tage gelagert, dann nochmals gewaschen und anschließend getrocknet wird.

Als Ausgangsstoffe werden sehr reine Lösungen verwendet. So wird z.B. in einer technischen Anlage die Ammoniumcarbonatlösung so hergestellt, daß aus destilliertem Wasser und gasförmigem Ammoniak zunächst Ammoniakwasser bereitet und zu dieser Lösung Trockeneis hinzugefügt wird, bis sich das gewünschte Verhältnis Ammoniak zu Kohlendioxid eingestellt hat. Dieser Prozeß ist sehr materialaufwendig, da ein großer Teil der Ausgangsstoffe verloren geht, deren Wiedergewinnung nur durch aufwendige Maßnahmen möglich ist.

Auch die Herstellung reiner, besonders sulfatarmer Calciumchlorid-Lösungen läßt sich nur mit hohen Aufwendungen realisieren.

Beim Betreiben der technischen Anlage wurde die Erfahrung gemacht, daß sich von Charge zu Charge unterschiedlich reine Produkte bildeten, so daß jede Charge analysiert werden und entsprechend ihrer Zusammensetzung in die verschiedenen Reinheitskategorien eingestuft werden muß.

Ziel der Erfindung ist, Calciumcarbonatpulver hoher Reinheit in gleichbleibender Qualität mit niedrigen Kosten herzustellen.

Der Erfindung liegt die technische Aufgabe zugrunde, ein Verfahren zur Herstellung von sehr reinen Calciumcarbonatpulvern in gleichbleibender Qualität aus wäßrigen Lösungen durch Fällung zu entwickeln, wobei die Fällstufe so zu gestalten ist, daß der Einbau von Fremdionen in das $CaCO_3$-Gitter weitestgehend vermieden wird, auch dann, wenn die eingesetzten Lösungen beträchtliche Mengen anderer Ionen enthalten.

Erfindungsgemäß wird die technische Aufgabe dadurch gelöst, daß bei Verwendung von wäßrigen calciumionenhaltigen Lösungen und wäßrigen carbonationenhaltigen Lösungen die Fällung bei Temperaturen von 20 - 50 °C, vorzugsweise 20 - 35 °C, unter schwach basischen Bedinungen durchgeführt, der gebildete vorwiegend aus Vaterit bestehende Feststoff in Gegenwart einer wäßrigen Phase so lange bei Temperaturen von 15 - 80 °C, vorzugsweise 20 - 50 °C, gehalten wird, bis sich der Vaterit möglichst vollständig in Calcit umgewandelt hat, dieser Feststoff nach bekannten Verfahren abgetrennt, gegebenenfalls gewaschen, getrocknet und gegebenenfalls nachzerkleinert wird.

Die Fällung sollte bei einem pH-Wert von 7,2 - 10,5, vorzugsweise 7,5 - 10, durchgeführt werden. Als wäßrige calciumionenhaltige Lösung kann eine durch Auflösen der entsprechenden Salze, insbesondere von $CaCl_2$ und von $Ca(NO_3)_2$, in Wasser hergestellte calciumionenhaltige Lösung eingesetzt werden. Es können auch calciumionenhaltige Lösungen verwendet werden, die durch Behandeln von calciumcarbonat-, calciumoxid- oder calciumhydroxidhaltigen Stoffen mit Säuren, insbesondere mit HCl und $HNO_3$, hergestellt wurden. Besonders vorteilhaft ist, daß auch industrielle Abfall-Lösungen, die Calciumionen enthalten, verwendet werden können. Geeignet sind beispielsweise die bei der Sodaherstellung nach dem Solvay-Verfahren anfallende geklärte und gereinigte calciumchloridhaltige Endlösung und die bei der Gewinnung von Lithiumverbindungen nach DDR-Patent 257 245 anfallende Calciumchloridlösung. Bei Verwendung ammoniumcarbonathaltiger Lösungen kann auch eine Calciumchloridlösung verwendet werden, die freien Ammoniak enthält.

Bei der Nutzung technischer Lösungen muß besonders den Sulfationen Beachtung geschenkt werden, da die Gefahr besteht, daß sich festes Calciumsulfat bildet, welches kaum wieder vollständig in Lösung gebracht werden kann. Es wurde nun gefunden, daß sich die zulässige Sulfationenkonzentration bedeutend erhöhen läßt, wenn die Calciumcarbonatfällung mit einem Unterschuß an Calciumionen durchgeführt wird.

Als carbonathaltige Lösungen eignen sich besonders alkali- und ammoniumcarbonathaltige Lösungen. Werden alkalicarbonathaltige Lösungen eingesetzt, spielt es keine Rolle, ob sie durch Auflösen der ensprechenden Feststoffe oder Carbonisieren der Laugen hergestellt wurden. Dabei können auch die chloridhaltigen Lösungen, die bei der Alkalichlorid-Elektrolyse nach dem Diaphragmaverfahren anfallen, eingesetzt werden. Die Alkalicarbonatlösungen können auch durch Umsetzung von Alkalihydrogencarbonaten mit Laugen bereitet werden. Werden ammoniumcarbonathaltige Lösungen verwendet, so ist es vorteilhaft, wenn diese mehr Ammoniak enthalten, als der Formel $(NH_4)_2CO_3$ entspricht.

Beispielsweise kann die bei der Herstellung von Harnstoff anfallende ammoniumcarbonathaltige Lösung verwendet werden. Es ist jedoch auch möglich, eine aus Ammoniumhydrogencarbonat, Wasser und Ammoniak hergestellte ammoniumcarbonathaltige Lösung zu verwenden. Es ist auch möglich, die Calciumionen enthaltende Lösung mit der Ammoniaklösung in einem Gefäß zu mischen und in dieses Gemisch gasförmiges konzentriertes oder verdünntes Kohlendioxid aus Rauchgas einzuleiten. Zweckmäßigerweise wird diese Umsetzung kontinuierlich durchgeführt.

Erfindungswesentlich ist, daß die Fällung unter schwach basischen Bedingungen durchgeführt wird. Der Fällungsprozeß kann diskontinuierlich oder kontinuierlich durchgeführt werden.

Bei der diskontinuierlichen Prozeßführung kann die Carbonatlösung vorgelegt und die Calciumsalzlösung zudosiert werden. Es können aber auch beide Lösungen in das Fällgefäß dosiert werden. Im letzteren Falle ist es angezeigt, vor dem eigentlichen Fällprozeß ein bestimmtes Flüssigkeitsvolumen, welches auch Vateritimpfkristalle enthalten kann, vorzulegen. Die kontinuierliche Fällung wird sinnvollerweise so durchgeführt, daß beide Lösungen einem Durchflußreaktor zugeführt werden, wobei die Dosierung so gesteuert wird, daß ein schwach basisches Milieu gehalten wird. Die Dosierung läßt sich leicht über den pH-Wert regeln.

Wenn die Anforderungen an die Reinheit des Calciumcarbonatpulvers nicht zu hoch sind, kann die bei der Fällung entstandene vaterithaltige Suspension so lange bei Temperaturen zwischen 15 und 80°C gehalten werden, bis sich der Vaterit weitgehend in Calcit umgewandelt hat. Werden höhere Reinheitsanforderungen gestellt, sollte die bei der Fällung entstandene vaterithaltige Suspension zunächst getrennt, der Feststoff gegebenenfalls gewaschen und erneut in Wasser suspendiert und diese Suspension so lange bei einer Temperatur zwischen 15 und 80°C gehalten werden, bis sich der Vaterit weitgehend in Calcit umgewandelt hat.

Um eine möglichst vollständige Umwandlung des Vaterits zu erreichen, ist es sinnvoll, die Suspensionen bei den angegebenen Temperaturen zu rühren.

Die Umwandlungsgeschwindigkeit läßt sich stark erhöhen, wenn dafür Sorge getragen wird, daß die wäßrige Phase eine möglichst hohe Calciumionenkonzentration aufweist. Das kann z.B. dadurch erreicht werden, daß in die Suspension $CO_2$ eingeleitet wird. Eine andere Möglichkeit besteht darin, der Suspension besimmte Mengen einer Mineralsäure, insbesondere HCl und $HNO_3$, zuzusetzen. Der gleiche Effekt wird erreicht, wenn der Suspension Hydrogencarbonate bzw. hydrogencarbonathaltige Lösungen, besonders calciumhydrogencarbonathaltige Lösungen, zugesetzt werden.

Soll ein besonders feines Pulver erhalten werden, kann das calcithaltige Pulver einer Naßmahlung unterzogen werden. Es kann aber auch die Umwandlung des vateritischen Feststoffes in einer Naßmühle durchgeführt werden.

Bei Einhaltung der erfindungsgemäßen Bedingungen wird bei der Fällung zunächst ein Feststoff hergestellt, der vorwiegend aus Vaterit besteht, und dieser Feststoff wird dann in Gegenwart einer wäßrigen Phase in einen Feststoff umgewandelt, der vorwiegend aus Calcit besteht. Bei diesem Umkristallisationsprozeß gehen die im Vateritgitter eingebauten Fremdionen in Lösung und werden überraschenderweise bei der Abscheidung des Calcits nicht mit in dessen Gitter eingebaut, sondern verbleiben in der wäßrigen Lösung.

Der Vorteil des erfindungsgemäßen Verfahrens besteht darin, daß nach dem erfindungsgemäßen Verfahren reine Calciumcarbonat-Pulver in gleichbleibender Qualität hergestellt werden können, wobei die eingesetzten calciumionenhaltigen Lösungen und die carbonationenhaltigen Lösungen beträchtliche Mengen anderer Ionen enthalten können.

Das erfindungsgemäße Verfahren soll anhand der folgenden 7 Beispiele erläutert werden:

Beispiel 1

3

In einem heiz- und kühlbaren Doppelwandrührkessel wurden 62 l einer Lösung vorgelegt, die pro Liter 90,0 g $NH_3$, 106,4 g $CO_2$ und 5 mg $SO_3$ enthielt. Diese Ammoniumcarbonat-Lösung wurde so hergestellt, daß zunächst aus deionisiertem Wasser und $NH_3$-Gas, das einer Stahlflasche entnommen wurde, eine ca. 28-prozentige Lösung hergestellt wurde. In diese Lösung wurde $CO_2$ eingeleitet. Dabei wurde die Temperatur bei Werten von ca. 30°C gehalten. Zu dieser Lösung wurden unter intensivem Rühren 32 Liter einer Calciumchloridlösung, die 510,6 g/l $CaCl_2$ und 100 mg $SO_3$/l enthielt, zudosiert, wobei die Dosiergeschwindigkeit 0,65 1/Minute betrug und die Temperatur bei Werten zwischen 28 und 32°C gehalten wurde. Die verwendete $CaCl_2$-Lösung wurde in der Weise bereitet, daß 400 l einer käuflichen Calciumchloridrohlauge, die durch Umsetzung von Kalk mit Salzsäure hergestellt wurde, in einem Rührkessel auf 70°C erwärmt wurde, dann wurden 25 ml 30-prozentiges Wasserstoffperoxid zugegeben, und nach ca. 5 Minuten wurden 10 l Kalkmilch zugesetzt. Nach zweistündigem Rühren wurde die flüssige Phase abfiltriert.

Das Fällungsende wurde durch Entnahme von Proben und Prüfung auf vollständige Fällung festgestellt. Der gebildete Feststoff wurde mitels einer Vakuumnutsche abgetrennt, mit 50 l deionisiertem Wasser gewaschen und anschließend analysiert. Die Bestimmung des Chloridgehaltes erfolgte argentometrisch mit potentiometrischer Endpunktsanzeige beziehungsweise nephelometrisch. Die Bestimmung des Stickstoffgehaltes erfolgte nach der Methode von Kjeldahl. Sulfat wurde über Bariumsulfat nephelometrisch bestimmt. Die Bestimmung des Natriumgehaltes wurde mittels Atomabsorption durchgeführt. Zur Analyse wurde eine Probe bei 80°C getrocknet. Diese Probe enthielt

| | |
|---|---|
| 0,3 % | $H_2O$ |
| 300 ppm | Cl |
| 1100 ppm | N |
| 50 ppm | $SO_3$ |

und wurde röntgenographisch als fast reiner Veterit identifiziert. Aus dem vateritischen Nutschenprodukt wurde nun eine wäßrige Suspension mit einem Feststoffgehalt von 30 % hergestellt. Diese wurde unter Rühren 20 Stunden bei einer Temperatur von 45°C gehalten. Dann wurde der Feststoff mittels einer Vakuumnutsche abgetrennt, mit 150 l destilliertem Wasser gewaschen, bei einer Temperatur von 100°C Trockenschrank getrocknet und anschließend analysiert. Folgende Gehalte an Verunreinigungen wurden gefunden:

| | |
|---|---|
| 10 ppm | Cl |
| 30 ppm | N |
| 40 ppm | $SO_3$ |
| 40 ppm | Na. |

In einem Vergleichsversuch wurde die $CaCO_3$-Fällung bei 60°C vorgenommen. Das durch Weiterbehandlung unter den gleichen Bedingungen, wie oben beschrieben, gebildete Endprodukt wies folgende Gehalte an Verunreinigungen auf:

| | |
|---|---|
| 50 ppm | Cl |
| 250 ppm | N |
| 50 ppm | $SO_3$ |
| 50 ppm | Na. |

Beispiel 2

Bei Verwendung der gleichen Ausgangslösungen und der gleichen Fällapparatur sowie bei gleicher Fälltemperatur, wie im Beispiel 1 beschrieben, wurden 62 l Ammoniumcarbonatlösung vorgelegt und 30 l Calciumchloridlösung zugegeben.

Durch Entnahme von Proben nach Zugabe der Calciumchloridlösung wurde ein Überschuß an Carbonationen in der wäßrigen Phase festgestellt. Danach wurde, wie im Beispiel 1 beschrieben, weiter verfahren. Das so gewonnene Produkt enthielt folgende Gehalte an Verunreinigungen:

| 15 ppm | Cl |
|--------|-----|
| 30 ppm | N |
| 20 ppm | $SO_3$ |
| 50 ppm | Na. |

Beispiel 3

Im Gegensatz zum Beispiel 1 wurde die Ammoniumcarbonatlösung in der Weise bereitet, daß in einem Doppelwandrührbehälter 50 l destilliertes Wasser und 12 l der Ammoniaklösung, wie sie bereits beschrieben wurde, vorgelegt wurden, und dazu wurden 11,9 kg käufliches Ammoniumhydrogencarbonat in fester Form unter Rühren zugegeben. Die so hergestellte Lösung enthielt 90 g $NH_3$/l und 106 g $CO_2$/l. Ihr Sulfatgehalt betrug 5 mg $SO_3$/l. Die Fällung und Weiterverarbeitung erfolgte, wie im Beispiel 1 beschrieben. Das erhaltene Endprodukt enthielt folgende Gehalte an Verunreinigungen:

| 15 ppm | Cl |
|--------|-----|
| 30 ppm | N |
| 40 ppm | $SO_3$ |
| 40 ppm | Na. |

Wurden zu der Ammoniumcarbonatlösung nur 30 l der Calciumchloridlösung zugegeben, wies das Endprodukt folgende Gehalte auf:

| 10 ppm | Cl |
|--------|-----|
| 20 ppm | N |
| 20 ppm | $SO_3$ |
| 50 ppm | Na. |

Beispiel 4

In dem in Beispiel 1 erwähnten Rührkessel wurden 10 l deionisiertes Wasser vorgelegt. Daraufhin wurden die unter Beispiel 1 beschriebene Calciumchloridlösung und die im Beispiel 3 beschriebene Ammoniumcarbonatlösung simultan hinzudosiert. Die Dosiergeschwindigkeit der Ammoniumcarbonatlösung betrug 1,25 l/Minute, die der Calciumchloridlösung 0,65 l/Minute. Die Temperatur wurde bei ca. 30°C gehalten. Während des Fällprozesses wurde ständig der pH-Wert verfolgt. Dabei wurde die Dosierung so fein nachreguliert, daß der pH-Wert sich im Bereich von 8 - 10 bewegte. Abtrennung und Waschen des gebildeten Feststoffes erfolgte, wie bereits beschrieben. Der Feststoff enthielt

| 400 ppm | Cl |
|---------|-----|
| 500 ppm | N |
| 50 ppm | $SO_3$ |

und bestand fast vollständig aus Vaterit.

Der feuchte Feststoff wurde, wie im Beispiel 1 erläutert, weiterverarbeitet. Das erhaltene Endprodukt enthielt

| 10 ppm | Cl |
|--------|-----|
| 20 ppm | N |
| 40 ppm | $SO_3$ |
| 40 ppm | Na. |

Beispiel 5

Eine Calciumchloridlösung (510g $CaCl_2$/l) mit 0,18 % $SO_4$ und eine 25 %ige Ammoniaklösung (220 g $NH_3$/l) wird kontinuierlich bei einem pH-Wert von 8,6 vermischt mit einer Zulaufgeschwindigkeit von 0,45 l/min bzw. 0,386 l/min unter gleichzeitigem Einleiten von Kohlendioxid der Konzentration von 48 % bei einer Temperatur von 30°C. Der gebildete Vaterit wird abgetrennt und wie nach Beispiel 1 beschrieben behandelt. Das so gewonnene Produkt enthielt folgende Verunreinigungen:

| 50 ppm | Cl |
|---|---|
| 30 ppm | N |
| 250 ppm | $SO_3$ |
| 50 ppm | Na. |

Beispiel 6

Das nach Beispiel 4 gebildete vateritische Zwischenprodukt wurde nach dem Waschen mit deionisiertem Wasser in deionisiertem Wasser aufgeschlämmt. Die so erhaltene Suspension enthielt 30 % Feststoff. In 50 l dieser Suspension wurde 30 Minuten lang $CO_2$ eingeleitet. Die Einleitungsgeschwindigkeit betrug 5 l/h. Danach wurde die Suspension bei 45°C gerührt. Nach unterschiedlichen Zeiten wurde der gebildete Feststoff analysiert. Dabei wurde festgestellt, daß im Gegensatz zum Rühren in reinem Wasser bereits nach 10 Stunden praktisch vollständige Umwandlung des Vaterits in Calcit erfolgt war. Das nach dem Trocknen erhaltene Endprodukt wies folgende Gehalte an Verunreinigungen auf:

| 10 ppm | Cl |
|---|---|
| 30 ppm | N |
| 30 ppm | $SO_3$ |
| 50 ppm | Na. |

Beispiel 7

Der nach Beispiel 3 gebildete vateritische Feststoff wurde in Wasser suspendiert, das an Calciumhydrogencarbonat gesättigt war. Es wurde ein Feststoffgehalt von ca. 30 % eingestellt. Die Suspension wurde bei 25°C in einer Trommelnaßmühle 5 Stunden lang behandelt. Nach dieser Zeit war die Umwandlung des Vaterits in Calcit praktisch vollständig abgeschlossen. Das Endprodukt wies folgende Gehalte an Verunreinigungen auf:

| 15 ppm | Cl |
|---|---|
| 40 ppm | N |
| 30 ppm | $SO_3$ |
| 50 ppm | Na. |

**Patentansprüche**

1. Verfahren zur Herstellung sehr reiner Calciumcarbonatpulver durch Fällung aus wäßrigen calciumionenhaltigen Lösungen, dadurch gekennzeichnet, daß bei Verwendung von wäßrigen calciumionenhaltigen Lösungen und wäßrigen carbonationenhaltigen Lösungen die Fällung bei Temperaturen von 20 - 50°C unter schwach basischen Bedingungen durchgeführt, der gebildete vorwiegend aus Vaterit bestehende Feststoff in Gegenwart einer wäßrigen Phase so lange bei Temperaturen von 15 bis 80°C gehalten wird, bis sich der Vaterit möglichst vollständig in Calcit umgewandelt hat, dieser Feststoff nach bekannten Verfahren abgetrennt, gegebenenfalls gewaschen, getrocknet und gegebenenfalls nachzerkleinert wird.

**2.** Verfahren nach Anspruch 1, dadurch gekennzeichnet, daß die Fällung bei Temperaturen von 20 - 35°C unter Einhaltung eines pH-Wertes von 7,2 - 10,5, vorzugsweise 7,5 - 10, durchgeführt und der gebildete vorwiegend aus Vaterit bestehende Feststoff in Gegenwart einer wäßrigen Phase so lange bei Temperaturen von 20 - 50°C gehalten wird, bis sich der Vaterit möglichst vollständig in Calcit umgewandelt hat.

**3.** Verfahren nach Anspruch 1 und 2, dadurch gekennzeichnet, daß eine durch Auflösen der entsprechenden Salze, insbesondere von $CaCl_2$ und von $Ca(NO_3)_2$, in Wasser hergestellte calciumionenhaltige Lösung eingesetzt wird.

**4.** Verfahren nach Anspruch 1 bis 3, dadurch gekennzeichnet, daß eine calciumionenhaltige Lösung verwendet wird, die durch Behandeln von calciumcarbonat-, calciumoxid- oder calciumhydroxidhaltigen Stoffen mit Säuren, insbesondere mit HCl und $HNO_3$, hergestellt wurde.

**5.** Verfahren nach Anspruch 1 bis 4, dadurch gekennzeichnet, daß die bei der Sodaherstellung nach dem Solvay-Verfahren anfallende geklärte und gereinigte calciumchloridhaltige Endlösung als calciumionenhaltige Lösung verwendet wird.

**6.** Verfahren nach Anspruch 1 bis 5, dadurch gekennzeichnet, daß die bei der Gewinnung von Lithiumverbindungen nach DDR-patent 257 245 anfallende Calciumchloridlösung verwendet wird.

**7.** Verfahren nach Anspruch 1 bis 6, dadurch gekennzeichnet, daß als carbonathaltige Lösungen Soda- oder Pottaschelösungen verwendet werden.

**8.** Verfahren nach Anspruch 1 bis 7, dadurch gekennzeichnet, daß durch Carbonisierung der entsprechenden Alkalilaugen hergestellte carbonathaltige Lösungen eingesetzt werden.

**9.** Verfahren nach Anspruch 1 bis 8, dadurch gekennzeichnet, daß durch Carbonisieren der bei der Alkalichloridelektrolyse anfallenden Bäderlauge hergestellte carbonathaltige Lösungen eingesetzt werden.

**10.** Verfahren nach Anspruch 1 bis 9, dadurch gekennzeichnet, daß aus Alkalilauge und Natriumhydrogencarbonat gewonnene carbonathaltige Lösungen eingesetzt werden.

**11.** Verfahren nach Anspruch 1 bis 10, dadurch gekennzeichnet, daß carbonathaltige Lösungen eingesetzt werden, die Ammoniumionen enthalten.

**12.** Verfahren nach Anspruch 1 bis 11, dadurch gekennzeichnet, daß ammoniumcarbonathaltige Lösungen verwendet werden, die mehr Ammoniak enthalten, als der Formel $(NH_4)_2CO_3$ entspricht.

**13.** Verfahren nach Anspruch 1 bis 12, dadurch gekennzeichnet, daß bei der Herstellung von Harnstoff anfallende ammoniumcarbonathaltige Lösungen verwendet werden.

**14.** Verfahren nach Anspruch 1 bis 12, dadurch gekennzeichnet, daß eine aus Ammoniumhydrogencarbonat, Wasser und Ammoniak hergestellte ammoniumcarbonathaltige Lösung verwendet wird.

**15.** Verfahren nach Anspruch 1 bis 14, dadurch gekennzeichnet, daß die Fällung in der Weise durchgeführt wird, daß die carbonationenhaltige Lösung vorgelegt und die calciumionenhaltige Lösung zudosiert wird.

**16.** Verfahren nach Anspruch 1 bis 15, dadurch gekennzeichnet, daß die Fällung durch simultane Zugabe der carbonationenhaltigen Lösung und der calciumionenhaltigen in ein Fällgefäß durchgeführt wird.

**17.** Verfahren nach Anspruch 1 bis 16, dadurch gekennzeichnet, daß zur Fällung des Vaterits eine calciumionenhaltige Lösung mit einer wäßrigen Ammoniaklösung vermischt und in dieses Gemisch Kohlendioxid eingeleitet wird.

**18.** Verfahren nach Anspruch 1 bis 17, dadurch gekennzeichnet, daß die Fällung des Vagerits kontinuierlich durch Vermischen der calciumionenhaltigen Lösung und der Ammoniaklösung bei gleichzeitigem Einleiten von Kohlendioxid erfolgt.

19. Verfahren nach Anspruch 1 bis 18, dadurch gekennzeichnet, daß die bei der Fällung entstandene vaterithaltige Suspension solange bei Temperaturen zwischen 15 und 80°C gehalten wird, bis sich der Vaterit weitgehend in Calcit umgewandelt hat.

20. Verfahren nach Anspruch 1 bis 19, dadurch gekennzeichnet, daß die bei der Fällung entstandene Suspension getrennt, der Feststoff gegegebenenfalls gewaschen, in Wasser suspendiert und die vaterithaltige Suspension so lange bei einer Temperatur zwischen 15 und 80°C gehalten wird, bis sich der Vaterit weitgehend in Calcit umgewandelt hat.

21. Verfahren nach Anspruch 1 bis 20, dadurch gekennzeichnet, daß in die vaterithaltige Suspension Kohlendioxid eingeleitet wird und die Suspension so lange bei Temperaturen zwischen 15 und 80°C gehalten wird, bis sich der Vaterit weitgehend in Calcit umgewandelt hat.

22. Verfahren nach Anspruch 1 bis 21, dadurch gekennzeichnet, daß zu der vaterithaltigen Suspension Calcium- oder Natriumhydrogencarbonat zugegeben wird und die Suspension so lange bei Temperaturen zwischen 15 und 80°C gehalten wird, bis sich der Vaterit weitgehend in Calcit umgewandelt hat.

23. Verfahren nach Anspruch 1 bis 22, dadurch gekennzeichnet, daß zu der vaterithaltigen Suspension geringe Säuremengen, insbesondere HCl und $HNO_3$ zugesetzt werden und die Suspension so lange bei Temperaturen zwischen 15 und 80°C gehalten wird, bis sich der Vaterit weitgehend in Calcit umgewandelt hat.

24. Verfahren nach Anspruch 1 bis 23, dadurch gekennzeichnet, daß der vorwiegend aus Vaterit bestehende Feststoff in Gegenwart einer wäßrigen Phase in einer Naßmühle, vorzugsweise einer Trommelnaßmühle, behandelt wird.

Europäisches
Patentamt

**EUROPÄISCHER RECHERCHENBERICHT**

Nummer der Anmeldung

EP 91 10 2434

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 100 264 (HEYTMEIJER et al.) * Spalte 2, Zeile 14; Spalte 4, Zeile 57 * --- | 1 | C 01 F 11/18 |
| A | US-A-2 941 860 (ANNIS) * Anspruch 1 * --- | 1 | |
| A | DD-A- 72 250 (ZöLLNER et al.) * Anspruch 1 * --- | 1 | |
| A | DE-B-1 592 147 (PFIZER INC.) * Anspruch 2 * --- | 1 | |
| A | CHEMICAL ABSTRACTS Band 109, Nr. 18, Oktober 1988, Zusammenfassung Nr. 152454h, Columbus, Ohio, US; & JP - A - 63156012 (CENTRAL GLASS CO.) 29.06.1988 ----- | 1 | |

| | RECHERCHIERTE SACHGEBIETE (Int. Cl.5) |
|---|---|
| | C 01 F 11/18 |

Der vorliegende Recherchenbericht wurde für alle Patentansprüche erstellt

| Recherchenort | Abschlußdatum der Recherche | Prüfer |
|---|---|---|
| BERLIN | 28-10-1991 | CLEMENT J.P. |